# EUROPEAN PATENT SPECIFICATION

(11) **EP 3 574 707 B1**
(45) Date of publication and mention of the grant of the patent: **23.08.2023**
(21) Application number: 17893925.2
(22) Date of filing: 20.12.2017
(51) Int. Cl.: H04W 76/34, H04W 76/38, H04W 76/19, H04W 76/27, H04W 48/02

(54) **CONNECTION RELEASE ASSISTANCE INFORMATION**
VERBINDUNGSFREISETZUNGSUNTERSTÜTZUNGSINFORMATIONEN
INFORMATIONS D'AIDE À LA LIBÉRATION D'UNE CONNEXION

(30) Priority: 24.01.2017 US 201715413857
(43) Date of publication of application: 04.12.2019
(73) Proprietor: Nokia Technologies Oy, 02610 Espoo (FI)
(72) Inventor: KOSKINEN, Jussi-Pekka, 90420 Oulu (FI)
(74) Representative: Nokia EPO representatives
(86) International application number: PCT/FI2017/050914
(87) International publication number: WO 2018/138408

(56) References cited:
- WO-A1-2013/144614
- WO-A1-2015/174767
- WO-A1-2017/199789
- WO-A2-2014/071171
- US-A1- 2012 155 257
- US-A1- 2013 316 720
- US-A1- 2014 018 085
- US-A1- 2015 237 576
- US-A1- 2015 256 961
- US-A1- 2015 334 636
- US-A1- 2016 157 256
- "3rd Generation Partnership Project; Technical Specification Group Services and System Aspects; Study on extended architecture support for Cellular Internet of Things (CIoT) (Release 14)", 3GPP STANDARD ; TECHNICAL REPORT ; 3GPP TR 23.730, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-83, XP051295447, [retrieved on 2016-12-16]
- ERICSSON: "Introduction of Release Assistance Indication", 3GPP DRAFT; 36321_CRXXXX_(REL-14)_R2-165156 INTRODUCTION OF RELEASE ASSISTANCE INDICATION, 3RD GENERATION PARTNERSHIP PROJECT (3GPP), MOBILE COMPETENCE CENTRE ; 650, ROUTE DES LUCIOLES ; F-06921 SOPHI , vol. RAN WG2, no. Gothenburg, Sweden; 20160822 - 20160826 21 August 2016 (2016-08-21), XP051126306, Retrieved from the Internet: URL:http://www.3gpp.org/ftp/Meetings_3GPP_ SYNC/RAN2/Docs/ [retrieved on 2016-08-21]
- INTEL: "CN Overload Control for Control Plane Only PDN Connection", 3GPP DRAFT; S2-165567_CONGESTIONCONTROLSUPPORT_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Kaohsiung, Taiwan; 20161017 - 20161021 16 October 2016 (2016-10-16), XP051155154, Retrieved from the Internet: URL:http://www.3gpp.org/ftp/Meetings_3GPP_ SYNC/SA2/Docs/ [retrieved on 2016-10-16]
- ERICSSON: "Release Assistance Indicator", 3GPP DRAFT; R2-161314 RELEASE ASSISTANCE INDICATOR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian, Malta; 20160215 - 20160219 14 February 2016 (2016-02-14), XP051055235, Retrieved from the Internet: URL:http://www.3gpp.org/ftp/Meetings_3GPP_ SYNC/RAN2/Docs/ [retrieved on 2016-02-14]

## Description

### TECHNOLOGICAL FIELD:

The described invention relates to wireless communications, and more particularly to connection establishment/connection release signaling between a user equipment and its radio network and to other activity related to such connection establishment/release signaling.

### BACKGROUND:

Acronyms used herein are listed below following the detailed description. There has been much research into adapting wireless radio access technologies for the practical implementation of the Internet of Things (IoT). For example, in Release 14 of the Long Term Evolution (LTE) radio access technology a user equipment (UE) can send to its network radio access nodes (eNB) radio resource control (RRC) connection release assistance information; see for example pages 67, 156, 221 and 229 of document R2-1700671 by ETSI MCC entitled Report of 3GPP RAN WG2 meeting #96 [3GPP RAN WG2 meeting #96 was held in Reno, US on 14-18 November 2016] which introduces an Autonomous Signaling Release assistance indication.

Fast Dormancy is a mobile technology feature designed to reduce battery consumption and network utilization between mobile devices and the radio network during periods of data inactivity. When the UE determines that the data activity (for uplink and / or downlink data) is not active anymore, the UE can indicate to the radio network that the UE desires to enter a state that better optimizes (reduces) its power consumption. Typically such a reduced power consumption UE state is the IDLE state or the connected mode state configured with a longer discontinuous (DRX) cycle. After the network receives the low activity indication the network will typically configure the UE with a more battery efficient configuration. The low activity indication from the UE may for example be embodied as a Signalling Connection Release Request (in UTRAN) or a Power preference indication (in E-UTRAN).

Because the demand for larger volumes of wireless data and an increasing number of wireless services has outstripped increases in battery storage capacity, the concept of idling data connectivity to achieve lower power consumption and improved battery life has been a common concept in the development of modern wireless technologies. For example, even prior to the development and publication of the Fast Dormancy feature mentioned above, one method (autonomous RRC connection release by the LTE) was commonly implemented to accomplish data connectivity idling even though earlier versions of the 3GPP specifications did not formally standardize it in-depth

But the "false" (RRC connection is released, but new one is established soon after the previous release) signalling connection release concept can result in a significant increase in signalling traffic, depending on how often the mobile devices have to re-establish a data connection when data needs to be sent or received. IoT devices are to send routine reports only occasionally. But not all reports from the IoT devices are routine, and so one problem with the signalling release assistance indication is that UEs such as IoT devices cannot easily predict whether there is or is not to be an uplink and/or downlink transmission in its near future. If the network releases the RRC connection based on the UE's signalling release assistance indication and there is uplink and/or downlink data that needs to be transmitted soon after that release, the UE's RRC connection needs to be established again which would cause excessive signalling between the UE and the network. This signalling increase can become substantial as IoT devices become more ubiquitous. Embodiments of these teachings address this issue, which may arise in LTE systems as mentioned above as well as other radio access technologies such as 5G (new radio) that is now under development.

Section 8.1.14 of 3GPP TS 25.331 v 13.5.0 (2016-12) describes the Signalling Connection Release Indication (UTRAN) procedure itself; this procedure is used by the UE to indicate to the network that one of its signalling connections has been released or to request the network to initiate a state transition to a battery efficient RRC state. In the prior art concerning timers, section 5.3.14.2 of 3GPP TS 36.331 V13.4.0 (2016-12) describes a 5s wait timer between a UE's transmission of two different *ProximityIndications.* That same radio specification describes procedures for the UE Assistance Information (E-UTRAN) and at section 5.6.10.2 conditions the UE's providing of power preference indications within this procedure on a T340 timer not running.

3GPP TR 23.730 V14.0.0 discloses in clauses 6.8.1.3-6.8.1.4 a control plane data back-off timer which is triggered by the UE if it receives a SERVICE ACCEPT from the MME after said UE has sent a Release Assistance Information in a NAS PDU to the MME and the MME has determined that it is overloaded.

Patent application WO2014/071171 A2 discloses usage of a prohibition time after one specific event is triggered and reported, in order to prevent the same event from being triggered and reported again.

### SUMMARY:

The invention is defined by independent claims 1 and 8. Further embodiments are defined by the dependent claims.

### BRIEF DESCRIPTION OF THE DRAWINGS:

FIG. 1 is a schematic diagram illustrating an example radio environment in which embodiments of these teachings may be practiced.
FIG. 2 is a table outlining a series of events to explain operation of the prohibit timer and its effects on those events.
FIG. 3 is a process flow diagram summarizing certain of the above teachings.
FIG. 4 is a high level schematic block diagram illustrating certain apparatus/devices that are suitable for practicing certain of these teachings.

### DETAILED DESCRIPTION:

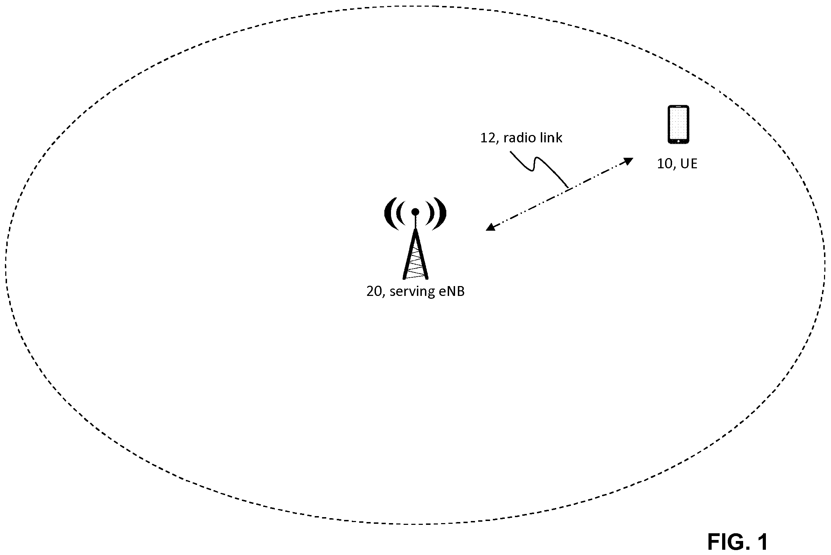

FIG. 1 is a schematic overview of an example radio environment in which embodiments of these teachings may be practiced to advantage. There is a serving eNB 20 having coverage area delineated by the dotted line that is in bidirectional wireless communication with a UE 10 via a radio link 12. The radio link 12 is active when the UE is in the RRC connected state but at other times when the UE is in an IDLE state or other lower power state the radio link 12 may be inactive or at least inactive at predefined times. In some deployments the radio link 12 may be to a relay node or a remote radio head RRH which from the UE's perspective stand in the position of the eNB 20. The eNB terminology implies a LTE radio access technology in use on the radio link 20 but this is not limiting; for example in the 5G/New Radio technology being developed by the 3GPP organization the traditional base station/eNB (gNB in 5G) is to be implemented as multiple RRHs that perform radio-frequency level signal processing (also known as layer 1) that are each located up to several km from a baseband unit (BBU, which may be implemented as multiple BBUs for added processing power) that performs baseband signal processing (also known as layer 2) and the BBU is coupled to the RRHs via front-haul links. The UE is to be in communication with one RRH or multiple RRHs simultaneously and the RRH/BBU combination is considered a gNB even though the different components of a traditional base station are not geographically co-located. Embodiments of these teachings can be deployed in other types of radio access technologies, but LTE is used in the non-limiting examples below.

It is well known in the radio arts that procedures known in advance to both the UE and the eNB are used to establish a RRC connection. According to the invention the UE is not allowed to establish a RRC connection for 'normal' reporting for a certain predefined period of time after this same UE has sent the release assistance indication. In this regard normal reporting encompasses data/information that is not high priority (that is, low and normal priority data). In some embodiments normal reporting includes all reporting that is not specifically pre-identified as exception reporting or emergency reporting. The term is consistent with common understanding in the radio arts. In the specific context of IoT devices normal periodic uplink reporting is expected to be common for cellular IoT applications such as smart utility metering reports (gas metering, water metering, electric metering, and other such utilities), smart agriculture (soil moisture content or plant size reports), and smart environment (interior room temperature or lighting reports), and so forth. IoT applications for industrial/factory applications can include a wide variety of parameters that are considered normal reports such as periodic process temperature, pressure or flow measurements.

During this pre-defined period of time after the UE sent its release assistance indication, the UE shall not attempt any connection establishment, unless the UE has high priority/exception data to report.

In at least the LTE radio access technology there are multiple steps to setup a RRC connection and there are slight variants of the basic RRC connection setup procedure that may apply in certain circumstances (RRC connection re-establishment, RRC connection resume, and the like). In this regard, shall not attempt any connection establishment means:
▪ the UE shall not send RRC Connection Request;
▪ the UE shall not sent RRC Connection Resume Request, and
▪ the UE shall not respond for paging.
▪ the UE shall not start a random access procedure.
▪ the network shall not send the paging for the UE.

During this pre-defined period of time after the UE sent its release assistance indication, in an embodiment of the claimed invention the UE is allowed to start connection establishment for the exception report transmission or an emergency call despite that the UE has recently requested the network to release the RRC connection. Considering again examples in the context of IoT, many sensor type applications are expected to monitor a physical condition and trigger an exception report when an event is detected. Such events are generally expected to be rare, typically occurring every few months or even years. Examples of such applications and exception reports include smoke alarm detectors sending a report indicating that smoke has been detected, reports from smart meters indicating there is a power failure or tampering of the meter or related utility infrastructure, moisture notifications from sensors located in residential or industrial areas that should be dry (such as near liquid storage tanks/vessels), out-of-limits alerts for sensors located along industrial processing lines (temperature, pressure, etc.), and the like.

In one embodiment the pre-defined period, the time for not allowing the connection establishment, is statically defined in the controlling radio specifications. In another embodiment this pre-defined period is configurable by the network for example the network may provide the duration of the pre-defined period to the UE by dedicated signalling (for example, a RRC Connection Reconfiguration or RRC Connection release message), or by broadcasted signalling (for example, system information block message) in the cell such as system information.

The UE may in some embodiments report the timer value in any of its connection establishment signaling such as when it sends to the network a RRC Connection Request or a RRC Connection Resume Request (or RRC Connection Re-establishment Request). If the timer value is greater than zero then in this case the network may enforce the prohibition by rejecting the connection attempt based on the reported timer value.

Above were described some implementations for distinguishing normal reporting from exception reporting. In a further example, not covered by the claimed invention, the network may signal to UE to configure which data is prohibited and/or allowed during the interval when the timer is running (for example low/high priority, normal/exception reporting).

For the case in which both the UE and the network track the pre-defined period during which the UE is prohibited from attempting any connection establishment, there needs to be a common understanding between the network and the UE exactly when to start this timer. In one embodiment the prohibition timer is started based on a transmission from the UE, for example when the UE sends its release assistance indication. In another embodiment the prohibition timer is started based on a transmission from the network, for example when the network releases the RRC connection (for example, by RRC Connection Release message from NW to UE) or when the network provides the UE with a more battery efficient configuration (for example, by RRC Connection Reconfiguration message from NW to UE). In any event the prohibition timer is stopped when it expires, but in some embodiments it preferably also is stopped when the UE changes its serving cell (or radio access technology RAT) and/or when the network signals the UE to suspend the prohibition timer or when the connection is established (for example, for high priority data).

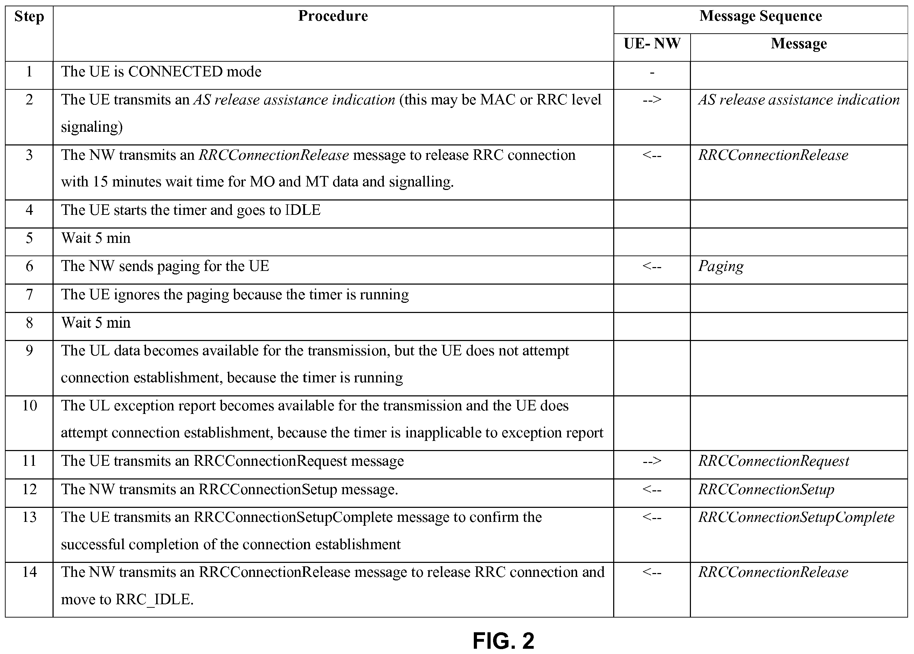

FIG. 2 is a table summarizing an example of a procedure to implement these teachings and shows actions by the UE and by the radio network. It is expected that these network actions will be taken by the radio access node (eNB) itself. FIG. 2 lists various possibilities such as the network having paging for the UE while the timer is running which are examples how the procedure operates in a practical radio environment to better illustrate operation of the prohibition timer in the context of certain events that may occur. The message names in FIG. 2 are specific to this LTE example and not limiting to the broader teachings herein.

Step 1 at FIG. 2 begins with the UE in a RRC connected state. Followed by step 2 whereby the UE sends to the network/eNB an *AS release assistance indication* which in different embodiments may be an MAC-level message or a RRC level message. In reply to the message at step 2, the network at step 3 transmits an *RRCConnectionRelease* message to release the RRC connection from step 1. In this non-limiting example the wait time/prohibition timer is 15 minutes, and for this duration the UE is prohibited from sending mobile-originating (MO in FIG. 2) data and the network is prohibited from sending mobile-terminating (MT in FIG. 2) data/signalling. There are exceptions as noted above for priority/emergency/exception data. Note also the MO and MT specifics still allow the UE to operate as a mobile relay for data communications with other mobile devices; in certain embodiments these teachings have no impact on mobile relay operations. Step 4 has the UE starting the wait/prohibition timer and going into the IDLE mode. IDLE mode is triggered by the connection release message at step 3; initiation of the wait timer may be triggered in one embodiment by the UE transmitting the *AS release assistance indication* at step 2 or in another embodiment by the UE receiving the *RRCConnectionRelease* message at step 3. If the network is also running a prohibition timer for this UE the same actions as at the UE will trigger that network timer.

Step 5 assumes some period of time elapses while the timer is still running, 5 minutes in this example, before the network sends a paging message to the UE at step 6. The page indicates downlink data for the UE and that downlink data may represent a call or non-voice data. Because the timer is still running the UE ignores this message at step 7; answering the page requires the UE to establish a connection which it is prohibited while the timer is running. In embodiments in which the network is also running a timer the eNB may get a page for this UE from the core network; in some embodiments the eNB will enforce the prohibition by ignoring that page since the eNB sees the timer is still running.

Now assume there is uplink data at the UE available for transmission. The timer runs another 5 minutes at step 8 and the UE at step 9 has normal uplink data to report but the UE does not attempt to establish a RRC connection because the 15 minute timer is still running and a total of only 10 minutes has elapsed. If instead the uplink data ready for transmission is exception report data as at step 10 the timer is not relevant/inapplicable in this particular embodiment and so the UE does attempt a RRC connection establishment which is detailed at steps 11-13. Specifically, the UE transmits at step 11 a *RRCConnectionRequest* message; in reply the network sends to the UE at step 12 a *RRCConnectionSetup* message; and once the new connection is successfully established at the UE side the UE sends at step 13 a *RRCConnectionSetupComplete* message to confirm the successful completion of the connection establishment. The UE can transmit its exception report at that time over the new RRC connection.

In some embodiments the UE zeros out any remaining time on the prohibition timer at this point and must specifically request release of this newly established RRC connection. In the embodiment at FIG. 2 the timer is still running after the UE sends its exception report on the new RRC connection at step 13, and the network is also running the same timer so at step 14 the fact that the timer is still running triggers the network to transmit a *RRCConnectionRelease* message to release that new RRC connection and move the UE to the RRC IDLE state.

One technical effect of implementing these teachings is that manufacturers of UEs, including manufacturers of relevant components thereof such as chipset manufacturers, can program their UEs so as to not over-use the Release Assistance Information indication and only use it when needed since they will be locked out of sending or receiving normal data for the duration of the prohibition timer. Essentially the prohibition timer described herein is a disincentive to UEs forcing a quick return into to idle mode when the UE was finished with data transmission. This disincentive serves to limit unnecessary connection establishment signaling overhead because from a signaling point of view it is more efficient to keep the UE in the connected mode if it will have data to transmit in the near future. In a preferred embodiment the prohibition timer will be standardized in the relevant radio specifications, though the actual duration thereof may or may not be standardized and if it is there may be an option for the network to override the standardized duration via dedicated or broadcast signaling in the cell.

With respect to the normal/exception classification of data, in an embodiment there are different sub-categories for normal and exception reporting applications with different priority/urgency, for example measurement data from different sensor types in an IoT application are given different priorities.

In another embodiment even exception reports are also prohibited for a certain period of time after the prohibition timer is initiated, but in this case the prohibited period is some subset of time less than the entire duration of the prohibition timer such as for example the first 5 minutes of the 15 minute prohibition timer in FIG. 2. In the more specific examples above the prohibition timer did not prohibit transmission of exception data at all (or any of the connection establishment procedures that would necessarily precede such transmission when the UE begins in an IDLE or otherwise not-connected state) because it is the nature of exception reporting that they will be difficult to predict ahead of time.

In the FIG. 2 example the network sent a page which the UE ignored. In other embodiments where the network is also running a prohibition timer for this UE, if for some reason the UE does send a RRC connection request or attempts to establish a connection by other signaling means, the network can simply ignore it if the timer is still running so long as the connection establishment message does not carry an indication that the data to be reported is exception data. Such an indication can be as little as a single bit in the *RRCConnectionRequest* message, or it can be the UE including the timer value/remaining time in the *RRCConnectionRequest* message for example so the network can automatically terminate the new connection per step 14 of FIG. 2 if it is still running once the exception data is transmitted.

In certain examples, sending of the Release Assistance Indication is prohibiting starting the connection establishment procedure (sending of RRC Connection Request or RRC Connection Resume request) for a certain type of traffic, but it still allows the sending of an RRC Connection Request or RRC Connection Resume request for other type of traffic.

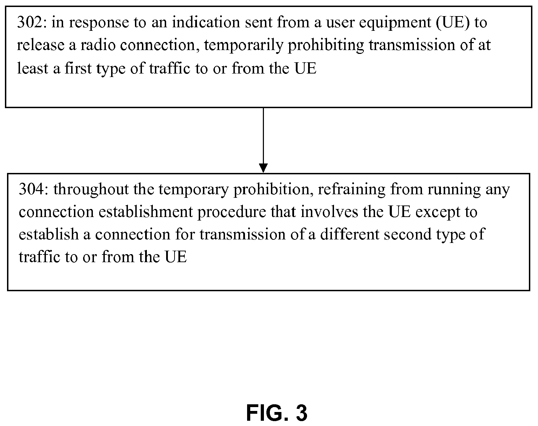

FIG. 3 is a process flow diagram that summarizes some of the above aspects in terms that read on both the UE and on the network, if in fact the network is also running the prohibition timer for the UE rather than only getting the remaining time in the UE's uplink signaling such as its RRC connection request message. At block 302, in response to an indication sent from a user equipment (UE) to release a radio connection, transmission of at least a first type of traffic to the UE (reading from the network's/eNB's perspective) or from the UE (reading from the UE's perspective) is temporarily prohibited. Block 304 details how this works; namely, throughout the temporary prohibition, the UE and the eNB refrain from running any connection establishment procedure that involves the UE except to establish a connection for transmission of a different second type of traffic to or from the UE. In the invention the at least first type of traffic includes normal event reporting (or low and normal priority data) and the second type of traffic includes exceptional event reporting (or high priority data), and these types of reporting/data are mutually exclusive.

In other embodiments above the indication at block 302 is explicit in a radio resource control message, specifically the indication is a RRC connection release assistance information sent by the UE to the network. In a different embodiment the indication at block 302 is implicit in a control element of a medium access control message, specifically the indication may be implicit in a buffer status report from the UE indicating an empty buffer or in a message from the UE requesting a battery efficient configuration.

In the invention, transmission of the first type of traffic to or from the UE is temporarily prohibited per block 302 of FIG. 3 until expiry of a timer that in one embodiment is initiated upon the indication of block 302 sent from the UE (step 2 of FIG. 2 for example), and in another embodiment it is initiated upon a reply to the indication of block 302 sent from the UE where the reply comprises a RRC connection release message (step 3 of FIG. 2 for example). In some examples, not covered by the claimed invention, there is also a prohibition on the sending of exception traffic/traffic of the second type; in this case transmission of the second type of traffic to or from the UE is temporarily prohibited for a duration that is a subset of the temporary prohibition at block 304 where the subset runs from when the timer is initiated until a predefined time prior to expiry of the timer.

In the specific LTE examples above, refraining from running any connection establishment procedure at block 302 was detailed as refraining from sending any of a RRC Connection Request, a RRC Connection Resume Request, or a RRC Connection Setup message, despite having traffic of the first type ready for transmission to or from the UE.

For the case FIG. 3 describes an embodiment from the perspective of the UE, block 302 means that transmission of the first type of traffic from the UE is temporarily prohibited. For the case FIG. 3 describes an embodiment from the perspective of the radio network/eNB (or more generally a radio access node serving the UE), block 302 means that transmission of the first type of traffic to the UE is temporarily prohibited.

Various of these examples, which are not covered by the claimed invention, summarized in the above paragraphs describing specifics for the two blocks of FIG. 3 may be practiced individually or in any of various combinations.

In another example, not covered by the claimed invention, the response at block 302 is to temporarily prohibit transmission of all traffic/data to or from the UE. In this case block 304 can enforce this temporary prohibition in one implementation by refraining from running any connection establishment procedure that involves the UE but there is no exception for some types of traffic/data, and in another implementation it can enforce the refraining by prohibiting the sending or receiving of all traffic/data to or from this UE without regard to the connection establishment procedure.

In a further example, not covered by the claimed invention, the first and second type traffic described for FIG. 3 can be reversed, so that it is the second type of traffic/data that is prohibited at block 302 and the first type of traffic/data is the exception at block 304. Similar to the example immediately above this also may be enforced by the first implementation (refrain from connection establishment procedures) and/or the second implementation (not sending traffic/data of the first type to or from the UE).

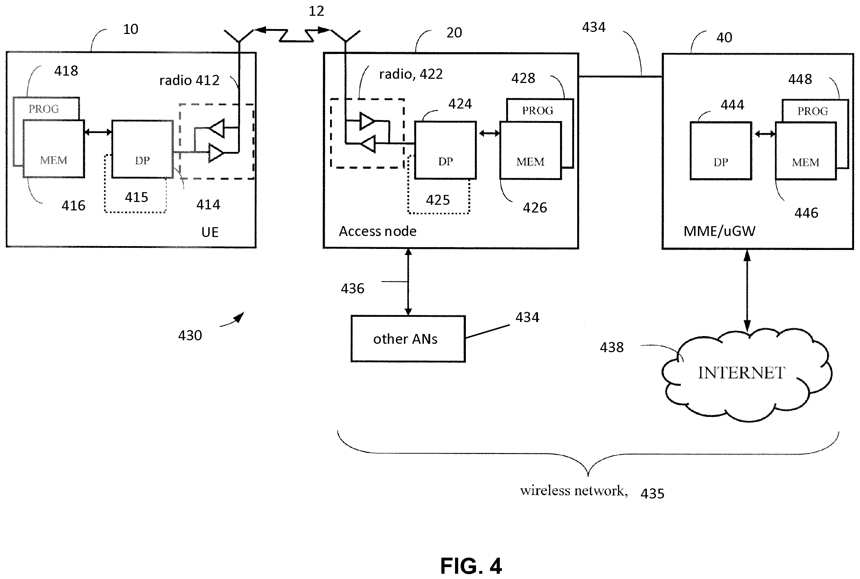

FIG 4 is a high level diagram illustrating some relevant components of various communication entities that may implement various portions of these teachings, including a base station identified generally as a radio network access node 20, a mobility management entity (MME) which may also be co-located with a user-plane gateway (uGW) 40, and a user equipment (UE) 10. In the wireless system 430 of FIG. 4 a communications network 435 is adapted for communication over a wireless link 12 with an apparatus, such as a mobile communication device which may be referred to as a UE 10, via a radio network access node 20. As noted above for an example gNB the radio access node may have distributed hardware (BBU and RRHs). The network 435 may include a MME/Serving-GW 40 that provides connectivity with other and/or broader networks such as a publicly switched telephone network and/or a data communications network (e.g., the internet 438).

The UE 10 includes a controller, such as a computer or a data processor (DP) 414 (or multiple ones of them), a computer-readable memory medium embodied as a memory (MEM) 416 (or more generally a non-transitory program storage device) that stores a program of computer instructions (PROG) 418, and a suitable wireless interface, such as radio frequency (RF) transceiver or more generically a radio 412, for bidirectional wireless communications with the radio network access node 20 via one or more antennas. In general terms the UE 10 can be considered a machine that reads the MEM/non-transitory program storage device and that executes the computer program code or executable program of instructions stored thereon. While each entity of FIG. 4 is shown as having one MEM, in practice each may have multiple discrete memory devices and the relevant algorithm(s) and executable instructions/program code may be stored on one or across several such memories.

In general, the various embodiments of the UE 10 can include, but are not limited to, mobile user equipments or devices, cellular telephones, smartphones, wireless terminals and autonomous IoT devices, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The radio network access node 20 also includes a controller, such as a computer or a data processor (DP) 424 (or multiple ones of them), a computer-readable memory medium embodied as a memory (MEM) 426 that stores a program of computer instructions (PROG) 428, and a suitable wireless interface, such as a RF transceiver or radio 422, for communication with the UE 10 via one or more antennas. The radio network access node 20 is coupled via a data/control path 434 to the MME 40. The path 434 may be implemented as an S1 interface. The radio network access node 20 may also be coupled to other radio network access nodes via data/control path 436, which may be implemented as an X5 interface.

The MME 440 includes a controller, such as a computer or a data processor (DP) 444 (or multiple ones of them), a computer-readable memory medium embodied as a memory (MEM) 446 that stores a program of computer instructions (PROG) 448.

At least one of the PROGs 418, 428 is assumed to include program instructions that, when executed by the associated one or more DPs, enable the device to operate in accordance with exemplary embodiments of this invention. That is, various exemplary embodiments of this invention may be implemented at least in part by computer software executable by the DP 414 of the UE 10; and/or by the DP 424 of the radio network access node 20; and/or by hardware, or by a combination of software and hardware (and firmware).

For the purposes of describing various exemplary embodiments in accordance with this invention the LTE 10 and the radio network access node 20 may also include dedicated processors 415 and 425 respectively. The prohibit timer described herein may be implemented by software running on a timing signal from an oscillator as is known in the art, and non-limiting examples such oscillators may be embodied within the DP 414, 424 or the dedicated processors 415, 425.

The computer readable MEMs 416, 426 and 446 may be of any memory device type suitable to the local technical environment and may be implemented using any suitable data storage technology, such as semiconductor based memory devices, flash memory, magnetic memory devices and systems, optical memory devices and systems, fixed memory and removable memory. The DPs 414, 424 and 444 may be of any type suitable to the local technical environment, and may include one or more of general purpose computers, special purpose computers, microprocessors, digital signal processors (DSPs) and processors based on a multicore processor architecture, as non-limiting examples. The wireless interfaces (e.g., RF transceivers 412 and 422) may be of any type suitable to the local technical environment and may be implemented using any suitable communication technology such as individual transmitters, receivers, transceivers or a combination of such components.

A computer readable medium may be a computer readable signal medium or a non-transitory computer readable storage medium/memory. A non-transitory computer readable storage medium/memory does not include propagating signals and may be, for example, but not limited to, an electronic, magnetic, optical, electromagnetic, infrared, or semiconductor system, apparatus, or device, or any suitable combination of the foregoing. Computer readable memory is non-transitory because propagating mediums such as carrier waves are memoryless. More specific examples (a non-exhaustive list) of the computer readable storage medium/memory would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

It should be understood that the foregoing description is only illustrative. Various alternatives and modifications can be devised by those skilled in the art. The scope of the claimed invention is defined by the appended claims.

A communications system and/or a network node/base station may comprise a network node or other network elements implemented as a server, host or node operationally coupled to a remote radio head. At least some core functions may be carried out as software run in a server (which could be in the cloud) and implemented with network node functionalities in a similar fashion as much as possible (taking latency restrictions into consideration). This is called network virtualization. "Distribution of work" may be based on a division of operations to those which can be run in the cloud, and those which have to be run in the proximity for the sake of latency requirements. In macro cell/small cell networks, the "distribution of work" may also differ between a macro cell node and small cell nodes. Network virtualization may comprise the process of combining hardware and software network resources and network functionality into a single, software-based administrative entity, a virtual network. Network virtualization may involve platform virtualization, often combined with resource virtualization. Network virtualization may be categorized as either external, combining many networks, or parts of networks, into a virtual unit, or internal, providing network-like functionality to the software containers on a single system.

The following abbreviations that may be found in the specification and/or the drawing figures are defined as follows:
- 3GPP: Third Generation Partnership Project
- AS: autonomous signalling
- eNB: base station of a LTE system
- E-UTRAN: evolved UMTS radio access network
- IoT: Internet of things
- LTE: long term evolution (of E-UTRAN)
- MAC: medium access control
- RAN: radio access network
- RRC: radio resource control
- UMTS: universal mobile telecommunications service

## Claims

1. A method comprising:
in response to an indication sent from a user equipment, UE, to release a radio connection, temporarily prohibiting (302) transmission of at least a first type of traffic to or from the UE; and
throughout the temporary prohibition, refraining (304) from running any connection establishment procedure that involves the UE except to establish a connection for transmission of a different second type of traffic to or from the UE, wherein
the at least first type of traffic includes normal event reporting and the second type of traffic includes exceptional event reporting, or the at least first type of traffic includes low and normal priority data and the second type of traffic includes high priority data.

2. The method according to claim 1, wherein the indication is at least one of:
explicit connection release assistance information;
implicit in a control element of a medium access control message.

3. The method according to claim 2, wherein the indication is implicit within at least one of a buffer status report from the UE indicating an empty buffer and a request by the UE for a battery efficient configuration.

4. The method according to any of claims 1-3, wherein transmission of at least the first type of traffic to or from the UE is temporarily prohibited until expiry of a timer that is initiated:
upon the indication sent from the UE; or
upon a reply to the indication sent from the UE, the reply comprising a radio resource control connection release message.

5. The method according to claim 4, the method further comprising temporarily prohibiting transmission of the second type of traffic to or from the UE from when the timer is initiated until a pre-defined time prior to expiry of the timer.

6. The method according to any of claims 1-5, wherein refraining from running any connection establishment procedure comprises refraining from sending any of a RRC Connection Request, a RRC Connection Resume Request and a RRC Connection Setup message, despite having traffic of the first type ready for transmission to or from the UE.

7. The method according to any of claims 1-6, wherein the method is performed by at least one of:
the UE and transmission of the first type of traffic from the UE is temporarily prohibited:
a radio access node serving the UE and transmission of the first type of traffic to the UE is temporarily prohibited.

8. An apparatus comprising:
timing means (414, 424) for controlling logic means to temporarily prohibit transmission of at least a first type of traffic to or from a user equipment, UE, in response to an indication sent from the UE to release a radio connection; and
the logic means being further for refraining from running any connection establishment procedure that involves the UE throughout the temporary prohibition, except to establish a connection for transmission of a different second type of traffic to or from the UE, wherein
the at least first type of traffic includes normal event reporting and the second type of traffic includes exceptional event reporting, or the at least first type of traffic includes low and normal priority data and the second type of traffic includes high priority data.

9. The apparatus according to claim 8, wherein the indication is explicit in a radio resource control message or implicit in a control element of a medium access control message.

10. The apparatus according to claim 9, wherein:
the explicit indication is connection release assistance information; or
the medium access control message is one of a buffer status report from the UE indicating an empty buffer and a request by the UE for a battery efficient configuration.

11. The apparatus according to any of claims 8-10, wherein transmission of the first type of traffic to or from the UE is temporarily prohibited until expiry of a timer that is initiated:
upon the indication sent from the UE; or
upon a reply to the indication sent from the UE, the reply comprising a radio resource control connection release message.

12. The apparatus according to claim 11, further comprising:
means for temporarily prohibiting transmission of the second type of traffic to or from the UE from when the timer is initiated until a pre-defined time prior to expiry of the timer.

13. The apparatus according to any of claims 8-12, wherein refraining from running any connection establishment procedure comprises refraining from sending any of a RRC Connection Request, a RRC Connection Resume Request and a RRC Connection Setup message, despite having traffic of the first type ready for transmission to or from the UE.

## Patentansprüche

1. Verfahren, das Folgendes umfasst:
vorübergehendes Verbieten (302) einer Übertragung von mindestens einer ersten Art von Verkehr zu oder von einer Teilnehmereinrichtung, UE, in Reaktion auf eine Anzeige zum Freigeben einer Funkverbindung, die von der UE gesendet wird; und
Unterlassen (304) des Ausführens einer Verbindungsaufbauprozedur, an der die UE beteiligt ist, außer zum Aufbauen einer Verbindung zur Übertragung einer anderen, zweiten Art von Verkehr zu oder von der UE während des gesamten vorübergehenden Verbots, wobei
die mindestens eine erste Art von Verkehr das Melden von normalen Ereignissen beinhaltet und die zweite Art von Verkehr das Melden von Ausnahmeereignissen beinhaltet, oder die mindestens eine erste Art von Verkehr Daten mit einer niedrigen und einer normalen Priorität beinhaltet und die zweite Art von Verkehr Daten mit einer hohen Priorität beinhaltet.

2. Verfahren nach Anspruch 1, wobei die Anzeige mindestens eines von Folgendem ist:
explizite Verbindungsfreigabeunterstützungsinformationen;
implizit in einem Steuerelement einer Medienzugriffssteuernachricht.

3. Verfahren nach Anspruch 2, wobei die Anzeige in mindestens einem von einem Pufferstatusbericht von der UE, der einen leeren Puffer anzeigt, und einer Anforderung einer batterieeffizienten Auslegung durch die UE implizit ist.

4. Verfahren nach einem der Ansprüche 1 bis 3, wobei eine Übertragung mindestens der ersten Art von Verkehr zu oder von der UE bis zum Ablauf eines Timers vorübergehend verboten ist, der wie folgt initiiert wird:
nachdem die Anzeige von der UE gesendet wurde; oder
nach einer Antwort auf die von der UE gesendeten Anzeige, wobei die Antwort eine Funkressourcensteuerverbindungsfreigabenachricht umfasst.

5. Verfahren nach Anspruch 4, wobei das Verfahren ferner das vorübergehende Verbieten einer Übertragung der zweiten Art von Verkehr zu oder von der UE vom Initiieren des Timers bis zu einer vordefinierten Zeit vor Ablauf des Timers umfasst.

6. Verfahren nach einem der Ansprüche 1 bis 5, wobei das Unterlassen des Ausführens einer Verbindungsaufbauprozedur das Unterlassen des Sendens von einem einer RRC-Verbindungsanforderung, einer RRC-Verbindungswiederaufnahmeanforderung und einer RRC-Verbindungseinrichtungsnachricht umfasst, obwohl Verkehr der ersten Art zur Übertragung zu oder von der UE bereit ist.

7. Verfahren nach einem der Ansprüche 1 bis 6, wobei das Verfahren von mindestens einem von Folgendem durchgeführt wird:
der UE, und eine Übertragung der ersten Art von Verkehr von der UE ist vorübergehend verboten:
einem Funkzugangsknoten, der die UE bedient, und eine Übertragung der ersten Art von Verkehr zur UE ist vorübergehend verboten.

8. Vorrichtung, die Folgendes umfasst:
Zeitsteuermittel (414, 424) zum Steuern von Logikmitteln, um in Reaktion auf eine Anzeige, die von einer Teilnehmereinrichtung, UE, zur Freigabe einer Funkverbindung gesendet wird, eine Übertragung von mindestens einer ersten Art von Verkehr zu und von der UE vorübergehend zu verbieten; und
wobei die Logikmittel ferner dem Unterlassen des Ausführens einer Verbindungsaufbauprozedur, an der die UE beteiligt ist, dient außer zum Aufbauen einer Verbindung zur Übertragung einer anderen, zweiten Art von Verkehr zu oder von der UE während des gesamten vorübergehenden Verbots, wobei
die mindestens eine erste Art von Verkehr das Melden von normalen Ereignissen beinhaltet und die zweite Art von Verkehr das Melden von Ausnahmeereignissen beinhaltet, oder die mindestens eine erste Art von Verkehr Daten mit einer niedrigen und einer normalen Priorität beinhaltet und die zweite Art von Verkehr Daten mit einer hohen Priorität beinhaltet.

9. Vorrichtung nach Anspruch 8, wobei die Anzeige in einer Funkressourcensteuernachricht explizit ist oder in einem Steuerelement einer Medienzugriffssteuernachricht implizit ist.

10. Vorrichtung nach Anspruch 9, wobei:
die explizite Anzeige Verbindungsfreigabeunterstützungsinformationen ist; oder
die Medienzugriffssteuernachricht eines von einem Pufferstatusbericht von der UE, der einen leeren Puffer anzeigt, und einer Anforderung einer batterieeffizienten Auslegung durch die UE ist.

11. Vorrichtung nach einem der Ansprüche 8 bis 10, wobei eine Übertragung der ersten Art von Verkehr zu oder von der UE bis zum Ablauf eines Timers vorübergehend verboten ist, der wie folgt initiiert wird:
nachdem die Anzeige von der UE gesendet wurde; oder
nach einer Antwort auf die von der UE gesendeten Anzeige, wobei die Antwort eine Funkressourcensteuerverbindungsfreigabenachricht umfasst.

12. Vorrichtung nach Anspruch 11, die ferner Folgendes umfasst:
Mittel zum vorübergehenden Verbieten einer Übertragung der zweiten Art von Verkehr zu oder von der UE vom Initiieren des Timers bis zu einer vordefinierten Zeit vor Ablauf des Timers.

13. Vorrichtung nach einem der Ansprüche 8 bis 12, wobei das Unterlassen des Ausführens einer Verbindungsaufbauprozedur das Unterlassen des Sendens von einem einer RRC-Verbindungsanforderung, einer RRC-Verbindungswiederaufnahmeanforderung und einer RRC-Verbindungseinrichtungsnachricht umfasst, obwohl Verkehr der ersten Art zur Übertragung zu oder von der UE bereit ist.

## Revendications

1. Procédé comprenant :
en réponse à une indication envoyée par un équipement utilisateur, UE, de libérer une connexion radio, l'interdiction temporaire (302) de la transmission d'au moins un premier type de trafic vers ou depuis l'UE ; et
pendant toute la durée de l'interdiction temporaire, l'abstention (304) d'exécuter toute procédure d'établissement de connexion impliquant l'UE, sauf pour établir une connexion en vue de la transmission d'un deuxième type de trafic différent vers ou depuis l'UE, dans lequel
le au moins un premier type de trafic comporte un rapport d'événements normal et le deuxième type de trafic comporte un rapport d'événements exceptionnel, ou le au moins un premier type de trafic comporte des données de priorité faible et normale et le deuxième type de trafic comporte des données de priorité élevée.

2. Procédé selon la revendication 1, dans lequel l'indication est au moins l'un parmi :
informations d'aide à la libération de la connexion explicites ;
implicite dans un élément de commande d'un message de commande d'accès au support.

3. Procédé selon la revendication 2, dans lequel l'indication est implicite dans au moins l'un parmi un rapport d'état de mémoire tampon de l'UE indiquant une mémoire tampon vide et une demande de l'UE d'une configuration de batterie efficace.

4. Procédé selon l'une des revendications 1 à 3, dans lequel la transmission d'au moins le premier type de trafic vers ou depuis l'UE est temporairement interdite jusqu'à l'expiration d'une temporisation qui est initiée :
sur l'indication envoyée par l'UE ; ou
sur une réponse à l'indication envoyée par l'UE, la réponse comprenant un message de libération de connexion de commande de ressources radio.

5. Procédé selon la revendication 4, le procédé comprenant en outre l'interdiction temporaire d'une transmission du deuxième type de trafic vers ou depuis l'UE à partir du moment où la temporisation est initiée jusqu'à un moment prédéfini avant l'expiration du temporisateur.

6. Procédé selon l'une des revendications 1 à 5, dans lequel l'abstention d'exécuter toute procédure d'établissement de connexion comprend l'abstention d'envoyer l'un quelconque parmi une demande de connexion RRC, une demande de reprise de connexion RRC et un message de réglage de connexion RRC, même si le trafic du premier type est prêt pour une transmission vers ou depuis l'UE.

7. Procédé selon l'une des revendications 1 à 6, dans lequel le procédé est réalisé par au moins l'un parmi :
l'UE, et la transmission du premier type de trafic par l'UE est temporairement interdite :
un noeud d'accès radio desservant l'UE, et la transmission du premier type de trafic à l'UE est temporairement interdite.

8. Appareil comprenant :
des moyens de temporisation (414, 424) pour commander des moyens logiques afin d'interdire temporairement une transmission d'au moins un premier type de trafic vers ou depuis un équipement utilisateur, UE, en réponse à une indication envoyée par l'UE de libérer une connexion radio ; et
les moyens logiques pour s'abstenir en outre d'exécuter toute procédure d'établissement de connexion impliquant l'UE pendant toute la durée de l'interdiction temporaire, sauf pour établir une connexion en vue de la transmission d'un deuxième type de trafic différent vers ou depuis l'UE, dans lequel
le au moins un premier type de trafic comporte rapport d'événements normal et le deuxième type de trafic comporte rapport d'événements exceptionnel, ou le au moins un premier type de trafic comporte des données de priorité faible et normale et le deuxième type de trafic comporte données de priorité élevée.

9. Appareil selon la revendication 8, dans lequel l'indication est explicite dans un message de commande de ressources radio ou implicite dans un élément de commande d'un message de commande d'accès au support.

10. Appareil selon la revendication 9, dans lequel :
l'indication explicite consiste en informations d'aide à la libération de la connexion ; ou
le message de commande d'accès au support est l'un parmi un rapport d'état de mémoire tampon de l'UE indiquant une mémoire tampon vide et une demande de l'UE d'une configuration de batterie efficace.

11. Appareil selon l'une des revendications 8 à 10, dans lequel la transmission du premier type de trafic vers ou depuis l'UE est temporairement interdite jusqu'à l'expiration d'une temporisation qui est initiée :
sur l'indication envoyée par l'UE ; ou
sur une réponse à l'indication envoyée par l'UE, la réponse comprenant un message de libération de connexion de commande de ressources radio.

12. Appareil selon la revendication 11, comprenant en outre :
des moyens pour interdire temporairement une transmission du deuxième type de trafic vers ou depuis l'UE à partir du moment où la temporisation est initiée jusqu'à un moment prédéfini avant l'expiration du temporisateur.

13. Appareil selon l'une des revendications 8 à 12, dans lequel l'abstention d'exécuter toute procédure d'établissement de connexion comprend l'abstention d'envoyer l'un quelconque parmi une demande de connexion RRC, une demande de reprise de connexion RRC et un message de réglage de connexion RRC, même si le trafic du premier type est prêt pour une transmission vers ou depuis l'UE.
